# EUROPÄISCHE PATENTSCHRIFT

(11) **EP 4 406 828 B1**
(45) Veröffentlichungstag und Bekanntmachung des Hinweises auf die Patenterteilung: **11.02.2026**
(21) Anmeldenummer: 23215218.1
(22) Anmeldetag: 08.12.2023
(51) Int. Cl.: B64C 1/06, B64D 37/30

(54) **FLUGZEUG MIT FLUGZEUGSEKTION**
AIRCRAFT WITH AIRCRAFT SECTION
AÉRONEF AVEC SECTION D'AÉRONEF

(30) Priorität: 26.01.2023 DE 102023101905
(43) Veröffentlichungstag der Anmeldung: 31.07.2024
(73) Patentinhaber: Airbus Operations GmbH, 21129 Hamburg (DE)
(72) Erfinder: PAUL, Carsten, 21129 Hamburg (DE); HAACK, Cord, 21129 Hamburg (DE); KAUFMANN, Sergej, 21129 Hamburg (DE)
(74) Vertreter: LKGLOBAL Partnerschaftsgesellschaft mbB

(56) Entgegenhaltungen:
- WO-A1-2017/188911
- WO-A1-2022/271436
- DE-A1- 102020 106 848
- US-A- 4 736 910
- US-A1- 2020 180 760
- US-A1- 2022 402 604
- US-B1- 9 505 484

## Beschreibung

### GEBIET DER ERFINDUNG

Die vorliegende Erfindung bezieht sich auf eine Flugzeugsektion für ein Flugzeug, ein Flugzeug mit einer ersten und einer zweiten Flugzeugsektion, ein Wasserstoffbetankungssystem für Flugzeuge und ein Verfahren für das Bereitstellen eines Flugzeugs.

### HINTERGRUND DER ERFINDUNG

Im Zusammenhang mit dem wirtschaftlichen Betreiben von Flugzeugen gibt es zunehmend Überlegungen zu den sogenannten *turn-around-Zeiten,* d.h. die Zeit, die notwendig ist, um zwischen zwei Flügen die erforderlichen Maßnahmen vorzunehmen. Die *turn-around-Zeit* (en: *turn-around-time*) wird auch als Umdrehzeit bezeichnet. Der Begriff bezeichnet den Zeitraum, an dem sich ein Flugzeug am Boden befindet (sogenannter Boden-*Turnaround*) sowie die in dieser Zeit stattfindenden Abfertigungstätigkeiten wie Reinigungsarbeiten, Be- und Entladung, Catering und *Pushback,* d.h. das externe Manövrieren des Flugzeugs. Neben dem Ein- und Ausstieg der Passagiere geht es dabei also auch um die An- und Ablieferung von Fracht und die Ver- und Entsorgung der Passagierkabine. Ein weiterer Punkt ist das Betanken des Flugzeugs. Hinzu kommen eventuell notwendige Reparatur-, Instandhaltungs- und Wartungstätigkeiten. Es hat sich gezeigt, dass hier Optimierungsbedarf besteht, um den Zeitraum, in dem das Flugzeug am Boden steht, möglichst effizient zu nutzen.

WO 2022/271436 A1 beschreibt, laut der bei espacenet verfügbaren Übersetzung, ein Luft- und Straßenfahrzeugsystem umfassend ein Straßenfahrzeug mit einem Fahrgestell, mehreren Rädern, einem Motor und einem Kabinenbereich. Ein Fluggerät mit einem Hauptkörper, Flügeln, Flugsteuerflächen und einer Vielzahl von Antriebsvorrichtungen ist durch eine Vielzahl von Andockmechanismen lösbar mit dem Straßenfahrzeug verbunden. In der verbundenen Ausrichtung ist das obere Ende des Straßenfahrzeugs mit der Unterseite der Kotflügel verbunden und das hintere Ende des Straßenfahrzeugs ist über eine verlängerte Verschlusszunge mit der Hauptkarosserie verbunden. Die Kommunikationsverbindung zwischen den Steuerungen im Flug- und Straßenfahrzeug erfolgt drahtlos oder über festverdrahtete Buchsen. In der getrennten Ausrichtung ist das Straßenfahrzeug als Straßenkraftfahrzeug funktionsfähig und in der verbundenen Ausrichtung sind das Fluggerät und das Straßenfahrzeug für den Flug in vertikaler oder horizontaler Ausrichtung funktionsfähig.

US 9 505 484 B1 beschreibt, laut der bei espacenet verfügbaren Übersetzung, ein modulares Flugzeugsystem bestehend aus einem einzelnen Rumpf mit einem fest installierten Leitwerk und mehreren Sätzen von Flügel- und Triebwerksmodulen, wobei jedes Flügel- und Triebwerksmodul für unterschiedliche Flugbedingungen und Missionen optimiert ist. Der Rumpf und jedes Modul sind für einen schnellen Ausbau und Einbau der Module konfiguriert, um die Ausfallzeiten des Flugzeugs zu minimieren. Kurze Flügel mit einer relativ geringen Streckung werden für Flüge mit relativ hoher Geschwindigkeit bereitgestellt, wenn große Ausdauer und/oder Gewichtsbelastbarkeit keine große Rolle spielen. Für Flüge mit größerer Reichweite und längerer Dauer, bei denen die Geschwindigkeit nicht unbedingt entscheidend ist, werden lange Flügel mit hoher Streckung bereitgestellt. Außerdem ist ein Flügelmodul mittlerer Spannweite vorhanden. Je nach den Missionsanforderungen des jeweiligen Fluges können Turboprop-, Einzel-Turbojet- und Doppel-Turbojet-Triebwerkmodule installiert werden. Das Flugzeug ist in erster Linie für den Einsatz als autonom oder ferngesteuertes unbemanntes Luftfahrzeug geeignet.

US 4 736 910 A beschreibt, laut der bei espacenet verfügbaren Übersetzung, ein Flugzeug, das einen Rumpf aufweist, der an einer vorderen Schottwand endet. Um die aerodynamische Form des Flugzeugs zu vervollständigen, sind ein oder mehrere austauschbare, missionsspezifische Nasenmodule und Heckmodule am Rumpf befestigt.

### ZUSAMMENFASSUNG DER ERFINDUNG

Eine Aufgabe der vorliegenden Erfindung besteht daher darin, ein Flugzeug zur Verfügung zu stellen, das in der Zeit am Boden zwischen zwei Flugmissionen eine verbesserte Effizienz für die Vielzahl der erforderlichen Tätigkeiten zur Verfügung stellt.

Diese Aufgabe wird durch den Gegenstand der unabhängigen Ansprüche gelöst; weitere Beispiele sind in den abhängigen Ansprüchen angegeben. Es ist zu beachten, dass die nachfolgend beschriebenen Aspekte der Erfindung auch für die Flugzeugsektion, für das Flugzeug, für das Wasserstoffbetankungssystem und für das Verfahren zum Bereitstellen des Flugzeugs gelten.

Gemäß der vorliegenden Erfindung ist eine Flugzeugsektion für ein Flugzeug vorgesehen. Die Flugzeugsektion weist wenigstens ein Flugwerkteil aus der Gruppe aufweisend Tragwerk und Leitwerk auf und ein erstes Rumpfwerkteil. Das wenigstens eine Flugwerkteil ist an dem Rumpfwerkteil montiert. Ferner weist das erste Rumpfwerkteil eine erste Kopplungsstelle auf, die zur lösbaren Verbindung mit einer zweiten Kopplungsstelle an einem zweiten Rumpfwerkteil ausgebildet ist, um in gekoppeltem Zustand ein integres Rumpfwerk eines Flugzeugs zu bilden. Die erste Kopplungsstelle stellt eine mechanische Kopplung mit einer zweiten Kopplungsstelle zur Verfügung und bildet eine Systeminfrastrukturschnittstelle. Ferner stellt die erste Kopplungsstelle eine Datenübertragungsvorrichtung für eine Integritätsprüfung zur Verfügung, wenn die Flugzeugsektion mit einer anderen Flugzeugsektion gekoppelt ist. Außerdem stellt die erste Kopplungsstelle eine Positioniersensorik für ein geführtes Andocken der Flugzeugsektion mit einer anderen Flugzeugsektion in einer Zielposition zur Verfügung.

Das Vorsehen einer Flugzeugsektion erlaubt zum Beispiel eine getrennte Handhabung von Flugzeugsektionen und ermöglicht somit beispielsweise eine größere Effizient für die oben beschriebenen Tätigkeiten. Eine Flugzeugsektion kann zum Beispiel am Zustieg angeordnet sein, so dass Passagiere ein- und aussteigen können, während die andere Flugzeugsektion zum Beispiel betankt wird. Die Kopplungsstelle gewährleistet, dass die erforderliche Integrität vorhanden ist, sobald die beiden Flugzeugsektion miteinander verbunden sind.

Das Vorsehen einer Flugzeugsektion ermöglicht zum Beispiel das Betanken der Flugzeugsektion mit Abstand zum Gate, d.h. Flugsteig. Die Flugzeugsektion kann beispielsweise auch als bereits betankte Flugzeugsektion zur Verfügung gestellt werden, um die Zeit zwischen zwei Flügen noch weiter zu verkürzen.

Die Kopplungsstelle kann auch als Schnellverschlusssystem bezeichnet werden.

Gemäß einem Beispiel weist die Datenübertragungsvorrichtung Sender- und Empfängereinheiten auf, mit denen Daten mit einer komplementären zweiten Kopplungsstelle einer anderen Flugzeugsektion bi-direktional austauschbar sind.

Gemäß einem Beispiel ist die Positioniersensorik mit Sensoren und Steuerungen ausgebildet, die ein Positionserfassen, ein Lenken und ein Zentrieren der ersten Flugzeugsektion mit einer anderen Flugzeugsektion relativ zueinander ermöglichen.

Gemäß einem Beispiel verwenden die Datenübertragungsvorrichtung und die Positioniersensorik eine gleiche gemeinsame Datenkommunikationseinrichtung.

Gemäß der vorliegenden Erfindung weist die Flugzeugsektion ferner eine Wasserstofftankvorrichtung mit mindestens einer Tankeinheit zum Aufbewahren von Wasserstoff auf. Die mindestens eine Tankeinheit bildet eine strukturell integre Einheit mit dem ersten Rumpfwerkteil. Wasserstoffleitungen sind vorgesehen, die ausgestaltet sind, um Wasserstoff von der Wasserstofftankvorrichtung der ersten Flugzeugsektion zu Verbrauchern in der anderen Flugzeugsektion zu leiten. Die Wasserstoffleitungen sind, für ein reversibles Koppeln mit der anderen Flugzeugsektion, an der ersten Kopplungsstelle mit einer ersten Leitungskopplung zur Verbindung mit einer komplementären zweiten Leitungskopplung ausgebildet.

Das Vorsehen einer Flugzeugsektion mit einer Wasserstofftankvorrichtung bietet den Vorteil, dass diese Flugzeugsektion zum Beispiel entfernt betankt werden kann. Das bedeutet gleichzeitig, dass der Betrieb mit Wasserstoff in die Infrastruktur heutiger Flughäfen, mit ihrer Umgebung und ihren Hallen, Vorfeldern und Stellplätzen, einfacher integriert werden kann, da sie keiner komplett neuen baulichen Auslegung bedürften. Neue wasserstoffgetriebene Flugzeuge können unter Einhaltung der durch die heutigen Flughäfen vorgegebenen Sicherheitsvorkehrungen, Standzeiten, Boarding- und Servicezeiten genutzt werden, da die Betankungseinrichtungen mit Abstand zu der vorhandenen baulichen Struktur umgesetzt werden können. Das ermöglicht auch einen Mischbetrieb zwischen konventionell- und wasserstoffgetriebenen Flugzeugen. Flugzeugsektionen mit Wasserstofftankvorrichtung können an separater Stelle, d.h. mit Abstand zu den bestehenden Gebäuden, und/oder hinter entsprechenden Sicherheitsmaßnahmen angeordnet, betankt, gewartet und auch vorgehalten werden. Dies berücksichtigt, dass wasserstoffgetriebene Flugzeuge mit Wasserstofftank und - Wasserstoffantrieb öfter zu prüfen und zu warten sind. Flugzeugteile, wie der Tank selber, müssen zum Beispiel als ganze Einheit austauschbar und schnell zugänglich sein. Das Vorsehen von trennbaren Sektionen der wasserstoffgetriebenen Flugzeuge ermöglicht dies.

Gemäß der vorliegenden Erfindung ist auch ein Flugzeug vorgesehen, das eine erste Flugzeugsektion und eine zweite Flugzeugsektion aufweist. Die zweite Flugzeugsektion ist komplementär zu der ersten Flugzeugsektion ausgebildet und bildet in gekoppeltem Zustand mit der ersten Flugzeugsektion ein integres Flugzeug.

Gemäß einem Beispiel sind eine Vielzahl an ersten oder zweiten Flugzeugsektionen vorgesehen. Die beiden Flugzeugsektionen sind so ausgestaltet, dass die erste und/oder zweite Flugzeugsektion durch wenigstens eine andere erste und/oder zweite Flugzeugsektion ausgetauscht werden kann, um ein strukturell und funktionell integres Flugzeug zu bilden.

Gemäß der vorliegenden Erfindung ist auch ein Wasserstoffbetankungssystem für Flugzeuge vorgesehen. Das System weist ein Flugzeug nach einem der vorhergehenden Beispiele auf. Eine der beiden Flugzeugsektionen des Flugzeugs ist mit einer Wasserstofftankvorrichtung ausgebildet. Ferner weist das System mindestens ein Transportsystem für eine der beiden Flugzeugsektionen auf und eine Wasserstoffbetankungsstation. Die Flugzeugsektion ist zusammen mit der Wasserstofftankvorrichtung von der anderen Flugzeugsektion entkoppelbar, und mit dem Transportsystem kann eine räumliche Distanz zwischen den beiden Flugzeugsektionen hergestellt werden. Die Flugzeugsektion kann mit der Wasserstofftankvorrichtung in der räumlichen Distanz (zu der anderen Flugzeugsektion betankt werden. Die Flugzeugsektionen sind anschließend (wieder) koppelbar, um ein betanktes integres Flugzeug zu bilden.

Gemäß der vorliegenden Erfindung ist auch ein Verfahren für das Bereitstellen eines Flugzeugs vorgesehen. Das Verfahren weist folgende Schritte auf: Bereitstellen einer ersten Flugzeugsektion und Bereitstellen einer zweiten Flugzeugsektion, die zu der ersten Flugzeugsektion komplementär ausgebildet ist. Ferner umfasst das Verfahren ein Positionieren der ersten und der zweiten Flugzeugsektion zueinander in einer Zielposition und ein mechanisches Koppeln der ersten und der zweiten Flugzeugsektion in der Zielposition. Ferner umfasst das Verfahren ein Verbinden der Systeminfrastruktur der ersten und der zweiten Flugzeugsektion, und ein bordinternes Prüfen der Integrität des Flugzeugs. Ferner umfasst das Verfahren eine Freigabe des Flugbetriebs bei bestätigter Integrität.

Gemäß einem Beispiel des Verfahrens weist eine der beiden Flugzeugsektionen ferner eine Wasserstofftankvorrichtung auf und beide Flugzeugsektionen bilden ein integres Flugzeug. Vor dem Schritt des Bereitstellens bzw. Positionierens ist vorgesehen: i) ein Entkoppeln der Flugzeugsektion mit der Wasserstofftankvorrichtung von der Flugzeugsektion ohne Wasserstofftankvorrichtung und ein Austauschen der Flugzeugsektion mit der Wasserstofftankvorrichtung durch eine Flugzeugsektion mit betankter Wasserstofftankvorrichtung; oder ein Betanken der Wasserstofftankvorrichtung mit Abstand zu der anderen Flugzeugsektion.

Als Vorteil ergibt sich beispielsweise, dass die Zugänglichkeit, die operative Zeit des Flugzeugs am Boden, die besonderen wasserstoffeigenen Bedingungen wie Kühlung, Betankung und Sicherheitsaspekte am Flughafen, als auch Standzeiten der Tankeinheit, und ggf. Brennstoffzellen, und deren häufige Wartung, Prüfung und Zugänglichkeiten vom operativen Passagierteil des Flugzeugs getrennt behandelt werden. Dadurch bleibt der eigentliche Flugbetrieb unbelastet, der Passagierraum in seiner Einheit erhalten und die Betankung kann entfernt, gesondert vorgenommen und just-in-time zugefügt werden. Die Verbindung der Kopplungsstelle ist so konstruiert, dass die Integrität des Flugkörpers nach der Fügung hergestellt wird, die Integrität funktional getestet und automatisch alle strukturmechanischen Anforderungen erfüllt sind. Die Systeme werden automatisch gekuppelt und mittels Sensorik auf Funktion geprüft und durch eine optische Prüfung überwacht. Die wichtigen Systeme sind zum Beispiel mehrfach vorhanden.

In einem Beispiel ist vorgesehen, dass die Kopplungsstellen der ersten Flugzeugsektion und der zweiten Flugzeugsektion einen Schnellverschluss am Querstoß der beiden angrenzenden Rumpfsektionen bilden. Das Flugzeug kann beispielsweise eine *Single-Aisle* Rumpfstruktur, d.h. einen Passagierbereich mit einem (in der Regel) mittleren Längsgang aufweisen. In einem anderen Beispiel weist das Flugzeug beispielsweise eine *Dual-Aisle* Rumpfstruktur auf.

Die Flugzeugsektionen bilden sozusagen zwei Einheiten. Die eine Flugzeugsektion, oder Einheit, weist zum Beispiel den Passagierdruckrumpf mit dem Cockpit sowie die Flügel mit den Antrieben auf. Die andere Flugzeugsektion, oder Einheit, weist zum Beispiel den Wasserstofftank und die Leitwerke auf.

Gemäß einem Aspekt ist vorgesehen, die Hecksektion bei Landung und leerem Tank von der vorderen Einheit bzw. Sektion zu trennen und eine betankte Einheit bzw. Sektion neu anzubinden. Die Verbindung wird durch die Kopplungsstelle ermöglicht, z.B. wird eine schnelle Lösbarkeit zur Verfügung gestellt, um eine möglichst geringe *turn-around*-Zeit am Boden einzuhalten. In dieser Zeitspanne erfolgen zum Beispiel die Entladung und Beladung von Passagieren und Gepäck bzw. Fracht sowie die Betankung des Flugzeugs.

Das Entkoppeln und Dislozieren der Sektion mit den Tanks von der Sektion der Passagiere durch die Kopplungsstelle ermöglicht eine vereinfachte Betankung, z.B. außerhalb des Passagierbereichs in angemessener notwendiger Zeit und einer sicheren Umgebung bezogen auf den Wasserstoff mit seinen speziellen Bedingungen, was zum Beispiel Kriterien wie Kälte, Druck und Tanktechnik berücksichtigt.

Die Kopplungsstelle ermöglicht außerdem auch, die Trennung und die Verbindung der Sektionen so zu gestalten, dass die Integrität des Flugkörpers mit der Struktur und seinen Steuereinheiten sicher und schnell sowie auch automatisch abläuft.

In einem Beispiel prüft, begleitet und testet eine vollständig an Bord der Sektionen befindliche Sensorik den Ablauf der Trennung und der Verbindung, z.B. automatisch, damit eine sichere neue (Flug-) Mission stattfinden kann.

In einer Variante ist als Option vorgesehen, dass das Rumpfheck auf- oder weggeklappt wird, die Wasserstofftanks entnommen und, neu betankt, wieder eingeschoben werden und das Heck wieder verschlossen wird. Die Trennstelle arbeitet mit den gleichen Kopplungsstellen.

Als Trennbereich für die Sektionen kommt zum Beispiel das Druckschott als Druckrumpf-Abschluss zum Passagierraum in Frage, oder die Aufnahme der Verbindungselemente zum Rumpfheck mit Tank.

Die Kopplungsstelle weist beispielsweise mechanisch öffenbare Bolzenverbindungen auf sowie Trennungen in den Systemen, wie zum Beispiel Leitungen oder Steuerungsverbindungen. Damit wird der Heckbereich zur Entnahme bzw. zum Abkoppeln freigegeben.

Beispielsweise ist für den Transport, d.h. das Weg- und Hinbewegen der Hecksektion eine Art Schlepper vorgesehen, auf dem die Hecksektion durch ein Transportgestell aufgenommen und über ein Leitsystem z.B. Laser-Leitstrahl geführt wird, z.B. zur Neu-Betankung. Die betankte Einheit wird mittels des Transportgestells wieder zur anderen Einheit, d.h. Flugzeugsektion gebracht. Über einen Laser-Leitstrahl wird die Einheit dann angedockt, wobei die genaue Positionierung über die Rumpf-Zentrierdorne hergestellt wird. Alle Verbindungen werden geschlossen, z.B. automatisch, und sensorisch überprüft und zur neuen Mission über Anzeige im Cockpit als "Integrität hergestellt" freigegeben. Die Sensorik ist so ausgelegt, dass während der gesamten Mission die "Integrität" des Gesamtrumpfes überwacht wird, d.h. die Forderung nach der Einheit gewährleistet ist.

Gemäß einem Aspekt ist vorgesehen, dass bei wasserstoffgetriebenen Flugzeugen trotz der operativen Einschränkungen des flüchtigen, extrem zu kühlenden Mediums H₂ bei gleichzeitig mehrfachem Volumen heutiger Brennstoffe für dieselbe Energieleistung, in etwa gleiche *turn-around*-Zeiten am Boden eingehalten werden können. Beispielsweise wird eine spezielle Betankung im Flugfeld zur Verfügung gestellt, was eine damit verbundene notwendige dezentrale Infrastruktur ermöglicht.

Dies erlaubt beispielsweise bei heutiger Infrastruktur der Flughäfen und deren Umgebung mit ihren Hallen, Vorfeldern und Stellplätzen eine neue Auslegung auch für die Benutzung durch wasserstoffgetriebene Flugzeuge. Bei der gegebenen Sicherheit und den üblichen Standzeiten, Boarding- und Servicezeiten ist eine annähernd gleichranginge Nutzung gewährleistet. Auch ein Mischbetrieb auf Grundlage derzeitiger Auslegungen ist möglich.

Das Ausbilden der Kopplungsstellen, sozusagen als Schnellverschluss am Querstoß von Rumpfstrukturen, ermöglicht ferner, Wasserstoff-Flugzeuge mit ihrem besonderen Tank und Antrieb öfter zu prüfen und zu warten. Außerdem sind Teile, wie der Tank selbst, als ganze Einheit leichter austauschbar und sind schnell zugänglich, da die ganze Sektion abtrennbar ist.

Die Trennstelle der Kopplungsstelle ist beispielsweise eine Art an einen Bajonettverschluss entlehnte Verbindung ganzer Rumpfsektionen zueinander. Es erlaubt das ganze Rumpfheck inklusive Leitwerke von dem vorderen Passagierraum mit Flügeln und Fahrwerken zu trennen, zu entfernen, und ein anderes Heck in schneller, zum Beispiel gesteuert arbeitender Fügung wieder zu einem kompletten Flugzeug als Einheit herzustellen.

Eine gleiche Trennung kann auch alternativ hinter dem Tank erfolgen, so dass nur die Sektion mit den Leitwerken entfernt wird und die Tankeinheit getauscht werden kann. Die Trennstelle selbst ist automatisch arbeitend. Dorne und Verschlusselemente stellen die lastübertragenden Strukturverbindungen her.

Als Vorteil ergibt sich eine, im Verhältnis zur üblich einzuhaltenden *turn-around-*Zeit am Boden, schnell lösbare Verbindung, um die geforderte *turn-around*-Zeit am Boden, bestehend aus z.B. Passagier, Gepäck-Ent- und Beladung sowie neue Betankung des Flugzeugs, einhalten zu können.

Ferner ergibt sich als Vorteil das Gewährleisten einer risikolosen Betankung, außerhalb des Passagierbereichs in angemessener notwendiger Zeit und sicherer Umgebung bezogen auf den Wasserstoff mit seinen speziellen Bedingungen (Kälte, Druck, Tanktechnik etc.).

Ferner ergibt sich als Vorteil bei zukünftigen, wasserstoffgetriebenen Flugzeugen, dass zumindest ein Teil der operativen Einschränkungen durch das flüchtige, extrem zu kühlende Medium Wasserstoff bei -253°C hinfällig ist. Bei gleichzeitig vierfachem Volumen heutiger Brennstoffe für die gleiche Energieleistung kann eine vergleichbare *turn-around*-Zeit, beziehungsweise Zeit zwischen den Missionen, am Boden eingehalten werden.

Ferner ergibt sich als Vorteil der Trennung und Verbindung der vorderen und hinteren Einheit, dass die Bildung der Integrität des Flugzeugs mit der Struktur und seinen Steuereinheiten sicher und schnell automatisch stattfinden kann.

Ferner ergibt sich als Vorteil aus der Sensorik, die den Ablauf der Trennung und Verbindung automatisch prüft, begleitet und testet, der Ablauf einer sicheren neuen Mission.

Diese und andere Aspekte der vorliegenden Erfindung werden aus den nachfolgend beschriebenen Ausführungsformen und Beispielen ersichtlich und werden durch sie verdeutlicht.

### KURZE BESCHREIBUNG DER ZEICHNUNGEN

Beispielhafte Ausführungsformen der Erfindung werden im Folgenden unter Bezugnahme auf die nachstehenden Zeichnungen beschrieben:
Fig. 1a zeigt schematisch ein Beispiel einer Flugzeugsektion mit einer Kopplungsstelle.
Fig. 1b zeigt ebenfalls schematisch ein Beispiel einer Flugzeugsektion mit einer Kopplungsstelle.
Fig. 2 zeigt schematisch eine detaillierte Ansicht einer Kopplungsstelle.
Fig. 3 zeigt schematisch ein Beispiel einer Flugzeugsektion mit einer Wasserstofftankvorrichtung.
Fig. 4 zeigt schematisch ein Beispiel eines Flugzeugs mit zwei Flugzeugsektionen.
Fig. 5 zeigt schematisch ein Beispiel eines Flugzeugs mit einer ausklappbaren Flugzeugsektion und entnehmbaren Tankeinheiten.
Fig. 6 zeigt schematisch ein Beispiel eines Wasserstoffbetankungssystems für Flugzeuge.
Fig. 7 zeigt grundlegende Schritte eines Beispiels für ein Verfahren für das Bereitstellen eines Flugzeugs mit Schnellverschlusssystem.

### DETAILLIERTE BESCHREIBUNG VON AUSFÜHRUNGSFORMEN

Bestimmte Ausführungsformen werden nun unter Bezugnahme auf die beigefügten Zeichnungen ausführlicher beschrieben. In der folgenden Beschreibung werden gleiche Bezugszeichen für gleiche Elemente verwendet, auch in verschiedenen Zeichnungen. Die in der Beschreibung definierten Sachverhalte, wie z. B. detaillierte Konstruktionen und Elemente, dienen dem umfassenden Verständnis der beispielhaften Ausführungsformen. Auch bekannte Funktionen oder Konstruktionen werden nicht im Detail beschrieben, da sie die Ausführungsformen mit unnötigen Details verschleiern würden. Außerdem verändern Ausdrücke wie "mindestens eines von", wenn sie einer Liste von Elementen vorangestellt werden, die gesamte Liste von Elementen und nicht die einzelnen Elemente der Liste.

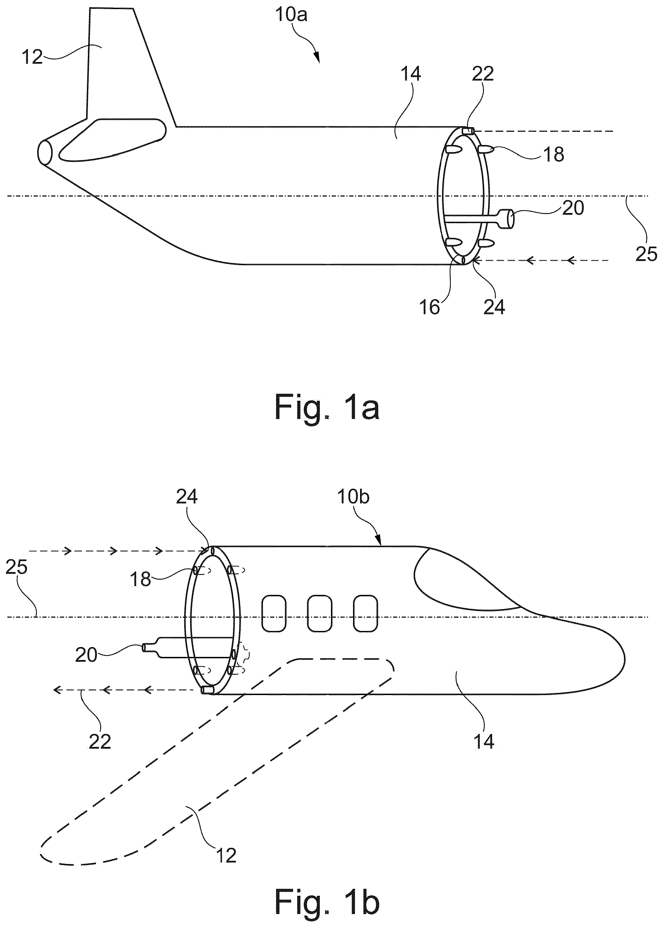

Fig. 1a und Fig. 1b zeigen schematisch ein Beispiel einer Flugzeugsektion 10a und 10b mit einer Kopplungsstelle. Die Flugzeugsektionen 10a und 10b weisen wenigstens ein Flugwerkteil 12 aus der Gruppe aufweisend Tragwerk und Leitwerk auf. Ferner weist die Flugzeugsektion ein erstes Rumpfwerkteil 14 auf. Das wenigstens eine Flugwerkteil ist an dem Rumpfwerkteil montiert. Das erste Rumpfwerkteil weist eine erste Kopplungsstelle 16 auf, die zur lösbaren Verbindung mit einer zweiten Kopplungsstelle an einem zweiten Rumpfwerkteil ausgebildet ist, um in gekoppeltem Zustand ein integres Rumpfwerk eines Flugzeugs zu bilden. Die erste Kopplungsstelle stellt eine mechanische Kopplung 18 mit einer zweiten Kopplungsstelle zur Verfügung. Ferner bildet die erste Kopplungsstelle eine Systeminfrastrukturschnittstelle 20 und stellt eine Datenübertragungsvorrichtung 22 für eine Integritätsprüfung zur Verfügung, wenn die Flugzeugsektion mit einer anderen Flugzeugsektion gekoppelt ist. Die erste Kopplungsstelle stellt ferner eine Positioniersensorik 24 für ein geführtes Andocken der Flugzeugsektion mit einer anderen Flugzeugsektion in einer Zielposition 25 zur Verfügung.

Der Begriff "Flugzeugsektion" bezieht sich auf einen Teil bzw. Abschnitt eines Flugzeugs. Die Flugzeugsektion, oder: Sektion, umfasst dabei bereits alle für den Flugbetrieb notwendigen Komponenten, Installationen, Verkleidungen etc. Die Sektion ist ein Abschnitt bzw. Teil eines fertigen Flugzeugs. Der Begriff Sektion bezieht sich nicht auf einen Abschnitt innerhalb des Flugzeugs, sondern auf einen (mittels der Kopplungsstelle) tatsächlich abtrennbaren Teil des Flugzeugs.

Der Begriff "Flugwerkteil" bezieht sich auf Teile der für das Fliegen notwendigen baulichen Strukturen, die als Flugwerk bezeichnet werden. Das Flugwerk umfasst die für den Auftrieb zuständigen Bauteile, die auch als Tragwerk bezeichnet werden. Das sind zum Beispiel Tragflächen, die auch Flügel genannt werden. Das Flugwerk umfasst auch die für das Steuern während des Fliegens zuständigen Bauteile, die auch als Leitwerk bezeichnet werden. Das sind zum Beispiel Höhen- oder Seitenleitwerk. Der Begriff Flugwerkteil 12 bezieht sich auf einen Teil des Flugwerks.

Der Begriff "Rumpfwerkteil" bezieht sich auf einen Teil der Rumpfkonstruktion des Flugzeugs. Der Rumpf dient zum Beispiel der Unterbringung der befördernden Last, z.B. Passagiere, Gepäck, Waren etc.

Das Rumpfwerkteil 14 weist zum Beispiel eine Rumpftragstruktur und eine Außenverkleidung auf. Das Rumpfwerkteil kann auch als erster Teil eines Rumpfwerks bezeichnet werden. Das Rumpfwerk kann auch als Rumpf oder Rumpfstruktur bezeichnet werden. Der Teil des Rumpfwerks kann als Rumpfteilstruktur bezeichnet werden.

Der Begriff "Kopplungsstelle" bezieht sich auf eine lösbare Verbindungsstelle zwischen zwei Flugzeugsektionen. Der Begriff "Kopplung" weist bereits auf die mechanische Verbindung und Anbindung der Systeme hin. Die erste Kopplungsstelle kann auch als erste Kopplungsregion oder erste Kopplungshälfte bezeichnet werden.

In einem Beispiel sind die erste Kopplungsstelle der ersten Flugzeugsektion und die zweite Kopplungsstelle der anderen Flugzeugsektion komplementär zueinander ausgestaltet.

Der Begriff "mechanische Kopplung" bezieht sich auf eine Verbindung, bei der auch mechanische Kräfte in beiden Richtungen übertragen werden können.

Der Begriff "Systeminfrastrukturschnittstelle" bezieht sich auf die Schnittstelle der Infrastruktur des Flugzeugs. Das sind zum Beispiel elektrische Leitungen zur Energieversorgung oder Daten- und Steuersignalübertragung. Das können beispielsweise auch Ver- und Entsorgungsleitungen sein, zum Beispiel für Frischwasser, Abwasser oder Treibstoff. Ein anderes Beispiel sind Luftkanäle für die Luftversorgung des Kabinenbereichs.

Der Begriff "Systeminfrastrukturschnittstelle" bezieht sich zum Beispiel auch auf die Übertragung von Flugbetriebsdaten, z.B. Daten bzw. Signale der Avionik. Die Systeminfrastrukturschnittstelle 20 umfasst zum Beispiel auch Schnittstellen für Übertragungselemente der Steuereingaben für den Flugbetrieb.

Der Begriff "Datenübertragungsvorrichtung" bezieht sich auf Einrichtungen zum Übertragen von Daten in beide Richtungen, d.h. Senden und Empfangen von Daten. Diese dienen insbesondere der Prüfung der Integrität. Dazu sind beispielsweise in beiden Sektionen Datenverarbeitungseinrichtungen vorgesehen, so dass eine bi-direktionale Überprüfung der Integrität erfolgen kann.

Der Begriff "Positioniersensorik" bezieht sich z.B. auf Vorrichtungen, mit denen eine Ist-Position der beiden Flugzeugsektionen zueinander erfasst werden kann. Mit der Positioniersensorik lässt sich außerdem eine Abweichung von einer Sollposition, z.B. einer Zielposition bestimmen, um ein zielgenaues Positionieren durchführen zu können.

Der Begriff "Zielposition" bezieht sich auf die Position der beiden Flugzeugsektionen zueinander, in der eine Kopplung zu einem integren Zustand des Flugzeugs führt.

Der Begriff "Integrität" bezieht sich auf den Zustand eines Flugzeugs, in dem es alle Bestimmungen erfüllt und für den Flugbetrieb grundsätzlich einsetzbar ist. Die Integrität eines Flugzeugs ist eine Art technische Abnahme bzw. Gewährleistung der Funktionsfähigkeit. Die Integrität ist dann gegeben, wenn die Systeme konfiguriert und nicht mehr unerkannt veränderbar sind.

Die Flugzeugsektion ist ausgebildet, um mit einer/der anderen Flugzeugsektion eine strukturell und funktionell integre Flugzeugeinheit zu bilden, d.h. eine erste und eine andere Flugzeugsektion ergänzen sich zu einer "missionsfähigen", also einsatzfähigen Flugzeugintegrität. Die beiden Flugzeugsektion komplementieren sich dabei, da keine der beiden Flugzeugsektionen für sich funktionsfähig im Sinne eines Flugzeugs ist.

Beispielsweise ist die Kopplungsstelle dazu konfiguriert, mindestens ein teilweises Abkoppeln und ein komplettes Ankoppeln mit mindestens einem vollständigen Zurückbilden der Flugsegmente und deren Infrastruktur zum flugfähigen Flugkörper zu ermöglichen. Die Kopplungsstellen sind zum Beispiel dazu konfiguriert, eine strukturelle und funktionelle Einheit des Flugkörpers nach dem vollständigen Zurückbilden aufrechtzuerhalten, indem sie strukturelle und funktionale Abweichungen von einem Ist-Zustand des Flugkörpers vor dem mindestens einem automatischen teilweisen Abkoppeln, und dem Ist-Zustand des Flugkörpers nach dem vollständigen automatischen Zurückbilden des Flugkörpers minimieren.

Die Primärstruktur ist grundsätzlich Bestandteil für die Zulassung eines Flugzeugs. Durch das Vorsehen einer ersten und einer anderen Flugzeugsektion erfolgt auch ein "Auseinandernehmen" der Primärstruktur, d.h. die Primärstruktur liegt nicht mehr als solche komplett intakt vor. Erst durch das Ankoppeln erfolgt die Wiederherstellung der Primärstruktur. Dieses strukturelle Zulassungsproblem wird durch die Integritätsprüfung adressiert und während der gesamten operativen Mission sensorisch überwacht.

In einem anderen Beispiel weicht die Flugzeugeinheit nach dem wiederholten Entkoppeln und Einkoppeln strukturell in geringem Maße voneinander ab, beispielsweise durch verschiedene äußere Einflüsse. Ein damit verbundener Verzug, der sich normalerweise durch die gesamte ergänzte Flugzeugeinheit überträgt, und in dem Fall durch die Kopplung unterbrochen wird, kann durch die Überwachung der Flugzeugsektionen durch die Kommunikationseinheit kompensiert werden. In einem Beispiel weicht die relative Stellung des Leitwerkes zu den Tragflächen ab. Das Kommunikationssystem ist in der Lage dies zu erkennen und an die Flugzeugsektionen zu kommunizieren. Diese können daraufhin entsprechende Flugparameter so einstellen, dass die relative Stellung des Leitwerkes zu den Tragflächen kompensiert werden kann.

In einer Option kann in einem Notfall in der Luft oder an Land eine Flugzeugsektion ausgekoppelt werden und eine andere Flugzeugsektion eine Notfalloperation ausführen, damit sich beide Flugzeugsektionen relativ zueinander entfernen. Beide Flugzeugsektionen können dabei Fallschirme aufweisen, um einen Sturz aus der Luft abzufangen.

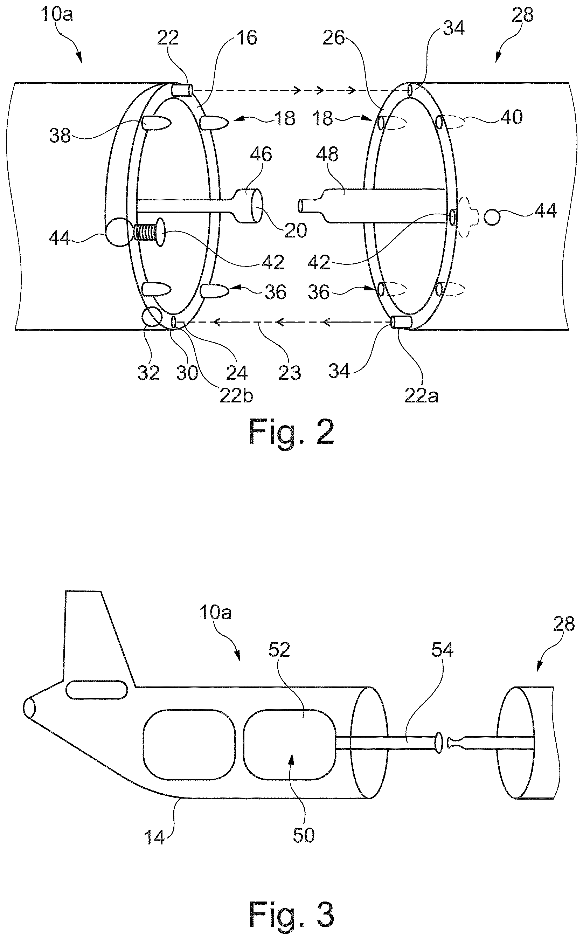

Fig. 2 zeigt schematisch eine detaillierte Ansicht einer Kopplungsstelle der Flugzeugsektion. Die Kopplungsstelle umfasst die Datenübertragungsvorrichtung 22, die Sender- und Empfängereinheiten 22a, 22b aufweist, mit denen Daten 23 mit einer komplementären zweiten Kopplungsstelle 26 einer anderen Flugzeugsektion 28 bi-direktional austauschbar sind.

In einem Beispiel der Fig. 2 ist die Positioniersensorik 24 mit Sensoren 30 und Steuerungen 32 ausgebildet, die ein Positionserfassen, Lenken und Zentrieren der ersten Flugzeugsektion mit einer anderen Flugzeugsektion relativ zueinander ermöglichen.

In einem anderen Beispiel der Fig. 2, verwenden die Datenübertragungsvorrichtung und die Positioniersensorik eine gleiche gemeinsame Datenkommunikationseinrichtung 34.

In einem Beispiel weist die Datenkommunikationseinrichtung 34 eine Kommunikationsvorrichtung umfassend Sender, Empfänger und Verarbeitungseinheiten auf. Beispielsweise erfolgt die Daten-Kommunikation mittels Lichtwellen, z.B. via Laser.

In einem anderen Beispiel erfolgt die Daten-Kommunikation mittels Schallwellen und/oder Materiewellen. In einem weiteren Beispiel erfolgt die Daten-Kommunikation mittels magnetischer und/oder elektrischer Felder. In einem Beispiel kann die Eigenschaft der Polarisierung von Lichtwellen genutzt werden. In einem Beispiel kann die Propagation von Materiewellen durch den Rumpf oder die Tragstrukturen der ergänzten Flugzeugeinheit erfolgen.

In einem weiteren Beispiel der Fig. 2 umfasst die mechanische Kopplung 18 wenigstens drei Kopplungseinheiten 36. Die wenigstens drei Kopplungseinheiten 36 weisen einen Positionierdorn 38 zur Halterung in einer Aufnahme eines komplementären Kopplungsteils oder eine Aufnahme 40 zum Halten eines Positionierdorns eines komplementären Kopplungsteils auf. In einer Option sind der Positionierdorn und die Aufnahme ausgestaltet, eine strukturelle Stabilität und Zentrierung der mechanischen Kopplung der Kopplungsteile auszubilden.

In einem weiteren Beispiel umfasst die mechanische Kopplung 18 mehr als drei der Kopplungseinheiten 36, zum Beispiel vier oder fünf oder mehr der Kopplungseinheiten 36.

In einem weiteren Beispiel der Fig. 2 bilden die komplementären Kopplungsteile eine Kopplungseinheit. Wenigstens eine der Kopplungseinheiten 36 weist einen selbstschließenden Bolzenverschluss 42 auf, der ausgestaltet ist, einen kontrollierbaren Verschluss der Kopplungseinheit zu bilden. In einer Option weist der Bolzenverschluss 42 eine Steuerung 44 auf, welche in Datenaustausch mit der Datenübertragungsvorrichtung 22 steht. Der Bolzenverschluss 42 gewährleistet, dass die Überprüfung der Integrität des Flugzeugs nur bei verriegelten Kopplungseinheiten 36 erfolgreich möglich ist.

In einem weiteren Beispiel der Fig. 2 weist die Systeminfrastrukturschnittstelle 20 erste Versorgungsleitungsverbindungsstellen 46 auf, welche komplementär zu zweiten Versorgungsleitungsverbindungsstellen 48 der anderen Flugzeugsektion ausgestaltet sind. Die Versorgungsleitungsverbindungsstellen 46, 48 sind an den Kopplungsstellen reversibel koppelbar ausgestaltet.

Fig. 3 zeigt schematisch ein Beispiel der Flugzeugsektion 10a mit einer Wasserstofftankvorrichtung 50. Die Wasserstofftankvorrichtung 50 weist mindestens eine Tankeinheit 52 zum Aufbewahren von Wasserstoff auf. Die mindestens eine Tankeinheit 52 bildet eine strukturell integre Einheit mit dem ersten Rumpfwerkteil 14. Vorzugsweise sind Wasserstoffleitungen 54 vorgesehen, die ausgestaltet sind, um Wasserstoff von der Wasserstofftankvorrichtung 50 der ersten Flugzeugsektion zu Verbrauchern in der anderen Flugzeugsektion 28 zu leiten. Die Wasserstoffleitungen 54 sind, für ein reversibles Koppeln mit der anderen Flugzeugsektion, an der ersten Kopplungsstelle mit einer ersten Leitungskopplung zur Verbindung mit einer komplementären zweiten Leitungskopplung ausgebildet.

In einem Beispiel sind Kommunikationsvorrichtungen vorgesehen, die konfiguriert sind, zusätzlich den Status der Wasserstofftanks und/oder der Wasserstoffleitungen zu überwachen.

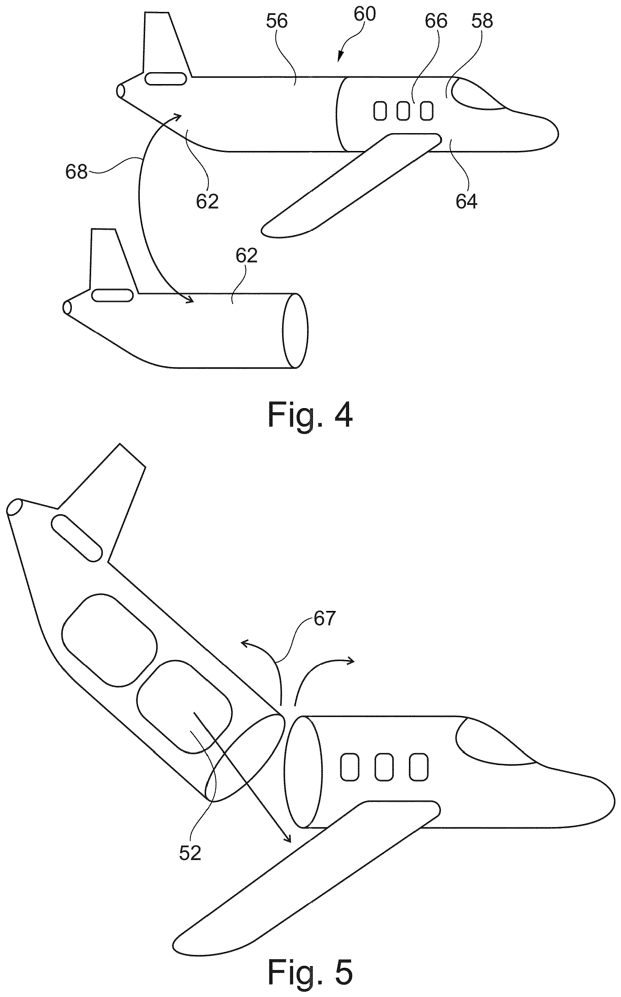

Fig. 4 zeigt schematisch ein Beispiel eines Flugzeugs mit zwei Flugzeugsektionen. Die Flugzeugsektion ist eine Hecksektion 56 und das wenigstens eine Flugwerkteil weist ein Heckleitwerk auf. Das Heckleitwerk umfasst Seitenleitwerk und Höhenleitwerk. Beispielsweise ist dann als andere Flugzeugsektion eine Passagiersektion vorgesehen, deren Flugwerkteil Flügel umfassend Triebwerke aufweist.

In einem Beispiel ist die Flugzeugsektion eine Passagiersektion 58 und das wenigstens eine Flugwerkteil weist Flügel umfassend Triebwerke auf. Die Passagiersektion weist zum Beispiel einen mit Druck beaufschlagbaren Kabinenbereich auf.

Beispielsweise ist dann als die andere Flugzeugsektion eine Hecksektion vorgesehen, deren Flugwerkteil ein Heckleitwerk aufweist umfassend Seitenleitwerk und Höhenleitwerk.

In einem Beispiel ist bei der Passagiersektion ein Fahrwerk vorgesehen.

In einem Beispiel der Fig. 4 weist ein Flugzeug eine erste Flugzeugsektion 62 nach einem der vorhergehenden Beispiele und eine zweite Flugzeugsektion 64 nach einem der vorhergehenden Beispiele auf. Die zweite Flugzeugsektion ist komplementär zu der ersten Flugzeugsektion ausgebildet und bildet in gekoppeltem Zustand mit der ersten Flugzeugsektion ein integres Flugzeug 66.

In einem Beispiel ist die erste Flugzeugsektion eine Hecksektion und die zweite Flugzeugsektion ist eine Passagiersektion. Die Hecksektion weist ein Heckleitwerk auf umfassend Seitenleitwerk und Höhenleitwerk. Die Passagiersektion weist einen Kabinenbereich auf, sowie Flügel umfassend Triebwerke.

In einem Beispiel sind in der Hecksektion Wasserstofftanks untergebracht. Die Hecksektion lässt sich beispielsweise vollständig entfernen. Beim Entfernen wird die Integrität des Flugzeugs (vorübergehend) aufgehoben. Beim erneuten Positionieren und Koppeln der beiden Flugzeugsektionen wird die Integrität des Flugzeugs wieder hergestellt und kann durch bordeigene Mittel überprüft und verifiziert werden.

In einem Beispiel sind die Wasserstofftanks am hinteren Ende einer Hauptsektion, d.h. am hinteren Ende der Passagiersektion, untergebracht.

In einem Beispiel der Fig. 4 ist eine Vielzahl an ersten oder zweiten Flugzeugsektionen vorgesehen. Die beiden Flugzeugsektionen sind so ausgestaltet, dass die erste und/oder zweite Flugzeugsektion durch wenigstens eine andere erste und/oder zweite Flugzeugsektion austauschbar ist (siehe erster Doppelfpeil 68), um ein strukturell und funktionell integres Flugzeug zu bilden. Beispielsweise bildet das Flugzeug mit den austauschbaren Sektionen eine Art Baukasten oder Flugzeugsystem, mit dem sich ein einfacheres Betanken von Wasserstofftanks und auch schnellere *turn-around*-Zeiten realisieren lassen.

Fig. 5 zeigt schematisch ein Beispiel eines Flugzeugs mit einer ausklappbaren Flugzeugsektion und entnehmbaren Tankeinheiten. Die Hecksektion lässt sich beispielsweise vollständig entfernen oder zumindest wegklappen (siehe zweiter Doppelpfeil 67), um die dem Aufbewahren von Wasserstoff dienende Tankeinheit 52 entnehmen zu können. Betankte Wasserstofftanks können dann wieder eingesetzt werden. Beim Wegklappen oder Entfernen wird die Integrität des Flugzeugs (vorübergehend) aufgehoben. Beim erneuten Positionieren und Koppeln der beiden Flugzeugsektionen wird die Integrität des Flugzeugs wieder hergestellt und kann durch bordeigene Mittel überprüft und verifiziert werden.

In einem Beispiel ist vorgesehen, dass die erste Flugzeugsektion, z.B. als Hecksektion, gegen eine andere erste Flugzeugsektion ausgetauscht wird, zum Beispiel zum Tanken oder zu Wartungs- oder Reparaturzwecken.

In einem Beispiel ist vorgesehen, dass die zweite Flugzeugsektion, z.B. als Passagiersektion, gegen eine andere zweite Flugzeugsektion ausgetauscht wird, zum Beispiel zum Umkonfigurieren des Kabinenbereichs, oder zu Wartungs- oder Reparaturzwecken.

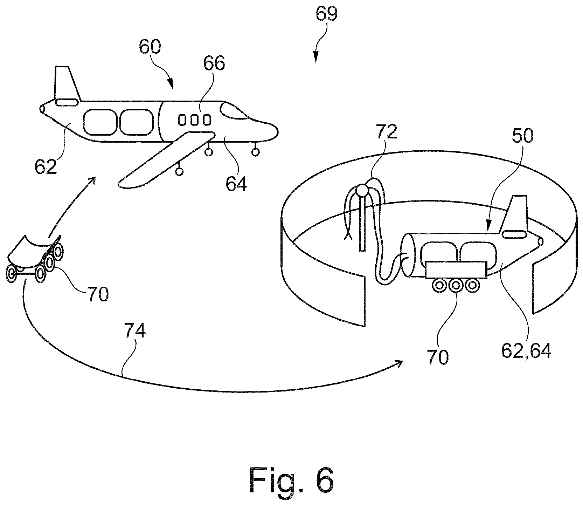

Fig. 6 zeigt schematisch ein Beispiel eines Wasserstoffbetankungssystems 69 für Flugzeuge. Das Wasserstoffbetankungssystem 69 für Flugzeuge weist ein Beispiel des Flugzeugs 60 nach einem der vorgehenden Beispiele auf. Eine der beiden Flugzeugsektionen 62, 64 ist mit einer Wasserstofftankvorrichtung ausgebildet. Das System umfasst ebenfalls mindestens ein Transportsystem 70 für eine der beiden Flugzeugsektionen und eine Wasserstoffbetankungsstation 72. Die Flugzeugsektion mit der Wasserstofftankvorrichtung ist von der anderen Flugzeugsektion entkoppelbar und mit dem Transportsystem kann eine räumliche Distanz 74 zwischen den beiden Flugzeugsektionen hergestellt werden. Die Flugzeugsektion mit der Wasserstofftankvorrichtung ist in der räumlichen Distanz zur anderen Flugzeugsektion betankbar und die Flugzeugsektionen sind anschließend koppelbar, um ein betanktes integres Flugzeug zu bilden.

In einem Beispiel ist ein Kommunikationssystem vorgesehen. Beispielsweise verfügt das Transportsystem über eine Kommunikationsvorrichtung, die mit der Kommunikationsvorrichtung der Flugzeugsektionen und mit der Wasserstofftankvorrichtung in Verbindung steht.

In einem Beispiel ist ein Transportsystem vorgesehen, das für das Bewegen der ersten Flugzeugsektion konfiguriert ist. Das Transportsystem weist ein Transportgestell auf, das ausgestaltet ist, um beim Transportieren die strukturelle Integrität der ersten Flugzeugsektion zu erhalten. Das Transportsystem weist ein Fahrwerk auf, das ausgestaltet ist zum Positionieren für das Entkoppeln und das Einkoppeln an der Kopplungsstelle der ersten Flugzeugsektion in der Zielposition. Das Transportsystem weist eine Transportkommunikationsvorrichtung auf, die ausgestaltet ist, um in Wechselwirkung mit den Kommunikationsvorrichtungen der Kopplungsstelle zu stehen.

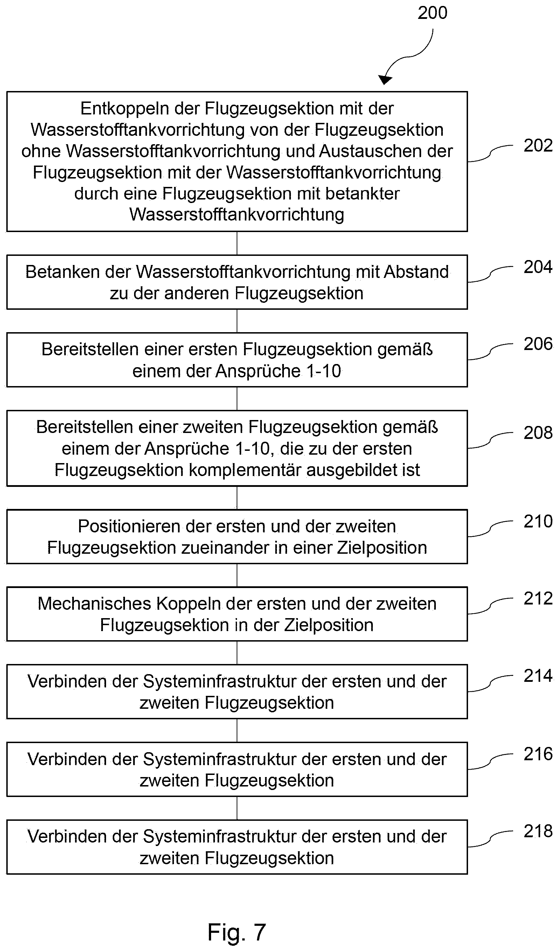

Fig. 7 zeigt grundlegende Schritte eines Beispiels für ein Verfahren 200 für das Bereitstellen eines Flugzeugs mit Schnellverschlusssystem. In einem ersten Schritt 206 wird eine erste Flugzeugsektion gemäß einem der vorgehenden Beispiele bereitgestellt. In einem weiteren Schritt 208 wird eine zweite Flugzeugsektion gemäß einem der vorhergehenden Beispiele bereitgestellt, die zu der ersten Flugzeugsektion komplementär ausgebildet ist. In einem nächsten Schritt 210 werden die erste und die zweite Flugzeugsektion zueinander in einer Zielposition positioniert. In einem nachfolgenden Schritt 212 werden die erste und die zweite Flugzeugsektion in der Zielposition mechanisch gekoppelt. In einem weiteren Schritt 214 wird die Systeminfrastruktur der ersten und der zweiten Flugzeugsektion miteinander verbunden. In einem weiteren Schritt 216 wird die Integrität des Flugzeugs bordintern geprüft und in einem noch weiteren Schritt 218 wird der Flugbetrieb bei bestätigter Integrität freigegeben. In einem Beispiel des Verfahrens umfasst das Positionieren der ersten Flugzeugsektion mit der zweiten Flugzeugsektion ferner einen zweistufigen Prozess, bei dem ein grobes Justieren und ein feines Justieren vorgesehen sind.

In einem Beispiel der Fig. 7 weist eine der beiden Flugzeugsektionen eine Wasserstofftankvorrichtung auf, und beide Flugzeugsektionen bilden ein integres Flugzeug. Das Verfahren beginnt hier schon bei dem Schritt 202, vor den Schritten des Bereitstellens beziehungsweise Positionierens 206, 208, 210. In einem ersten vorausgehenden Schritt 202 werden die Flugzeugsektionen mit der Wasserstofftankvorrichtung von der Flugzeugsektion ohne Wasserstofftankvorrichtung entkoppelt und die Flugzeugsektion mit der Wasserstofftankvorrichtung wird durch eine Flugzeugsektion mit betankter Wasserstofftankvorrichtung ausgetauscht.

In einer anderen Option ist ein zweiter vorausgehender Schritt 204 vorgesehen, bei dem die Wasserstofftankvorrichtung mit Abstand zu der anderen Flugzeugsektion betankt wird.

Es ist zu beachten, dass Ausführungsformen der Erfindung unter Bezugnahme auf unterschiedliche Gegenstände beschrieben werden. Insbesondere werden einige Ausführungsformen unter Bezugnahme auf die Ansprüche des Verfahrenstyps beschrieben, während andere Ausführungsformen unter Bezugnahme auf die Ansprüche des Vorrichtungstyps beschrieben werden. Der Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination zwischen Merkmalen, die sich auf verschiedene Gegenstände beziehen, als mit dieser Anmeldung offenbart gilt. Alle Merkmale können jedoch kombiniert werden, um Synergieeffekte zu erzielen, die über die einfache Summe der Merkmale hinausgehen.

Obwohl die Erfindung in den Zeichnungen und der vorstehenden Beschreibung detailliert dargestellt und beschrieben ist, sind solche Darstellungen und Beschreibungen als illustrativ oder beispielhaft und nicht als einschränkend anzusehen. Die Erfindung ist nicht auf die offengelegten Ausführungsformen beschränkt. Andere Variationen der offengelegten Ausführungsformen können von Fachleuten bei der Durchführung der beanspruchten Erfindung anhand der Zeichnungen, der Offenbarung und der abhängigen Ansprüche verstanden und ausgeführt werden.

In den Ansprüchen schließt das Wort "umfassend" andere Elemente oder Schritte nicht aus, und der unbestimmte Artikel "ein" oder "an" schließt eine Mehrzahl nicht aus. Ein einziger Prozessor oder eine andere Einheit kann die Funktionen mehrerer in den Ansprüchen aufgeführter Elemente erfüllen. Die bloße Tatsache, dass bestimmte Maßnahmen in verschiedenen abhängigen Ansprüchen wiederholt genannt werden, bedeutet nicht, dass eine Kombination dieser Maßnahmen nicht vorteilhaft sein kann. Etwaige Bezugszeichen in den Ansprüchen sind nicht als Einschränkung des Anwendungsbereichs zu verstehen.

## Patentansprüche

1. Eine Flugzeugsektion (10a, 10b) für ein Flugzeug, die Flugzeugsektion aufweisend:
- wenigstens ein Flugwerkteil (12) aus der Gruppe aufweisend Tragwerk und Leitwerk; und
- ein erstes Rumpfwerkteil (14);
wobei das wenigstens eine Flugwerkteil an dem Rumpfwerkteil montiert ist;
wobei das erste Rumpfwerkteil eine erste Kopplungsstelle (16) aufweist, die zur lösbaren Verbindung mit einer zweiten Kopplungsstelle an einem zweiten Rumpfwerkteil ausgebildet ist, um in gekoppeltem Zustand ein integres Rumpfwerk eines Flugzeugs zu bilden;
wobei die erste Kopplungsstelle:
- eine mechanische Kopplung (18) mit einer zweiten Kopplungsstelle zur Verfügung stellt;
- eine Systeminfrastrukturschnittstelle (20) bildet; und
- eine Datenübertragungsvorrichtung (22) für eine Integritätsprüfung zur Verfügung stellt, wenn die Flugzeugsektion mit einer anderen Flugzeugsektion gekoppelt ist; und
wobei die erste Kopplungsstelle eine Positioniersensorik (24) für ein geführtes Andocken der Flugzeugsektion mit einer anderen Flugzeugsektion in einer Zielposition (25) zur Verfügung stellt
wobei die Flugzeugsektion ferner eine Wasserstofftankvorrichtung (50) mit mindestens einer Tankeinheit (52) zum Aufbewahren von Wasserstoff aufweist;
wobei die mindestens eine Tankeinheit eine strukturell integre Einheit mit dem ersten Rumpfwerkteil bildet; und
wobei, Wasserstoffleitungen (54) vorgesehen sind, die ausgestaltet sind, um Wasserstoff von der Wasserstofftankvorrichtung der ersten Flugzeugsektion zu Verbrauchern in der anderen Flugzeugsektion zu leiten; wobei die Wasserstoffleitungen, für ein reversibles Koppeln mit der anderen Flugzeugsektion, an der ersten Kopplungsstelle mit einer ersten Leitungskopplung zur Verbindung mit einer komplementären zweiten Leitungskopplung ausgebildet sind.

2. Flugzeugsektion nach Anspruch 1, wobei die Datenübertragungsvorrichtung (22) Sender- und Empfängereinheiten (22a, 22b) aufweist, mit denen Daten (23) mit einer komplementären zweiten Kopplungsstelle (26) einer anderen Flugzeugsektion (28) bi-direktional austauschbar sind.

3. Flugzeugsektion nach Anspruch 1 oder 2, wobei die Positioniersensorik (24) mit Sensoren (30) und Steuerungen (32) ausgebildet ist, die ein Positionserfassen, Lenken und Zentrieren der ersten Flugzeugsektion mit einer anderen Flugzeugsektion relativ zueinander ermöglichen.

4. Flugzeugsektion nach Anspruch 1 oder 2 oder 3, wobei die Datenübertragungsvorrichtung und die Positioniersensorik eine gleiche gemeinsame Datenkommunikationseinrichtung (34) verwenden.

5. Flugzeugsektion nach einem der vorhergehenden Ansprüche, wobei die mechanische Kopplung (18) wenigstens drei Kopplungseinheiten (36) umfasst, die jeweils aufweisen:
i) einen Positionierdorn (38) zur Halterung in einer Aufnahme eines komplementären Kopplungsteils; oder
ii) eine Aufnahme (40) zum Halten eines Positionierdorns eines komplementären Kopplungsteils;
wobei der Positionierdorn und die Aufnahme ausgestaltet sind, eine strukturelle Stabilität und Zentrierung der mechanischen Kopplung der Kopplungsteile auszubilden.

6. Flugzeugsektion nach einem der vorhergehenden Ansprüche, wobei die komplementären Kopplungsteile eine Kopplungseinheit bilden; und wobei wenigstens eine der Kopplungseinheiten einen selbstschließenden Bolzenverschluss (42) aufweist, der ausgestaltet ist, einen kontrollierbaren Verschluss der Kopplungseinheit zu bilden; und
wobei der Bolzenverschluss eine Steuerung (44) aufweist, welche in Datenaustausch mit der Datenübertragungsvorrichtung steht.

7. Flugzeugsektion nach einem der vorhergehenden Ansprüche, wobei die Systeminfrastrukturschnittstelle (20) erste Versorgungsleitungsverbindungsstellen (46) aufweist, welche komplementär zu zweiten Versorgungsleitungsverbindungsstellen (48) der anderen Flugzeugsektion ausgestaltet sind; und
wobei die Versorgungsleitungsverbindungsstellen an den Kopplungsstellen reversibel koppelbar ausgestaltet sind.

8. Flugzeugsektion nach einem der Ansprüche 1-7, wobei die Flugzeugsektion eine Hecksektion (56) ist und wobei das wenigstens eine Flugwerkteil ein Heckleitwerk aufweist, umfassend Seitenleitwerk und Höhenleitwerk.

9. Flugzeugsektion nach einem der Ansprüche 1-7, wobei die Flugzeugsektion eine Passagiersektion (58) ist und wobei das wenigstens eine Flugwerkteil Flügel umfassend Triebwerke aufweist.

10. Ein Flugzeug (60), aufweisend:
- eine erste Flugzeugsektion (62) nach einem der vorhergehenden Ansprüche; und
- eine zweite Flugzeugsektion (64), aufweisend:
- wenigstens ein Flugwerkteil (12) aus der Gruppe aufweisend Tragwerk und Leitwerk; und
- ein erstes Rumpfwerkteil (14);
wobei das wenigstens eine Flugwerkteil an dem Rumpfwerkteil montiert ist;
wobei das erste Rumpfwerkteil eine erste Kopplungsstelle (16) aufweist, die zur lösbaren Verbindung mit einer zweiten Kopplungsstelle an einem zweiten Rumpfwerkteil ausgebildet ist, um in gekoppeltem Zustand ein integres Rumpfwerk eines Flugzeugs zu bilden;
wobei die erste Kopplungsstelle:
- eine mechanische Kopplung (18) mit einer zweiten Kopplungsstelle zur Verfügung stellt;
- eine Systeminfrastrukturschnittstelle (20) bildet; und
- eine Datenübertragungsvorrichtung (22) für eine Integritätsprüfung zur Verfügung stellt, wenn die Flugzeugsektion mit einer anderen Flugzeugsektion gekoppelt ist; und
wobei die erste Kopplungsstelle eine Positioniersensorik (24) für ein geführtes Andocken der Flugzeugsektion mit einer anderen Flugzeugsektion in einer Zielposition (25) zur Verfügung stellt; und
wobei die zweite Flugzeugsektion komplementär zu der ersten Flugzeugsektion ausgebildet ist und in gekoppeltem Zustand mit der ersten Flugzeugsektion ein integres Flugzeug (66) bildet.

11. Flugzeug nach Anspruch 10, wobei eine Vielzahl an ersten oder zweiten Flugzeugsektionen vorgesehen ist; und
wobei die beiden Flugzeugsektionen so ausgestaltet sind, dass die erste und/oder zweite Flugzeugsektion durch wenigstens eine andere erste und/oder zweite Flugzeugsektion austauschbar ist, um ein strukturell und funktionell integres Flugzeug zu bilden.

12. Ein Wasserstoffbetankungssystem (69) für Flugzeuge, aufweisend:
- ein Flugzeug nach Anspruch 10 oder 11, wobei eine der beiden Flugzeugsektionen (62, 64) mit einer Wasserstofftankvorrichtung ausgebildet ist;
- mindestens ein Transportsystem (70) für eine der beiden Flugzeugsektionen; und
- eine Wasserstoffbetankungsstation (72);
wobei die Flugzeugsektion mit der Wasserstofftankvorrichtung von der anderen Flugzeugsektion entkoppelbar ist und mit dem Transportsystem eine räumliche Distanz (74) zwischen den beiden Flugzeugsektionen herstellbar ist;
wobei die Flugzeugsektion mit der Wasserstofftankvorrichtung in der räumlichen Distanz betankbar ist; und
wobei die Flugzeugsektionen anschließend koppelbar sind, um ein betanktes integres Flugzeug zu bilden.

13. Ein Verfahren (200) für das Bereitstellen eines Flugzeugs, das Verfahren aufweisend folgende Schritte:
- Bereitstellen (206) einer ersten Flugzeugsektion gemäß einem der Ansprüche 1-9;
- Bereitstellen (208) einer zweiten Flugzeugsektion, aufweisend:
- wenigstens ein Flugwerkteil (12) aus der Gruppe aufweisend Tragwerk und Leitwerk; und
- ein erstes Rumpfwerkteil (14);
wobei das wenigstens eine Flugwerkteil an dem Rumpfwerkteil montiert ist;
wobei das erste Rumpfwerkteil eine erste Kopplungsstelle (16) aufweist, die zur lösbaren Verbindung mit einer zweiten Kopplungsstelle an einem zweiten Rumpfwerkteil ausgebildet ist, um in gekoppeltem Zustand ein integres Rumpfwerk eines Flugzeugs zu bilden;
wobei die erste Kopplungsstelle:
- eine mechanische Kopplung (18) mit einer zweiten Kopplungsstelle zur Verfügung stellt;
- eine Systeminfrastrukturschnittstelle (20) bildet; und
- eine Datenübertragungsvorrichtung (22) für eine Integritätsprüfung zur Verfügung stellt, wenn die Flugzeugsektion mit einer anderen Flugzeugsektion gekoppelt ist; und
wobei die erste Kopplungsstelle eine Positioniersensorik (24) für ein geführtes Andocken der Flugzeugsektion mit einer anderen Flugzeugsektion in einer Zielposition (25) zur Verfügung stellt; und
wobei die zweite Flugzeugsektion zu der ersten Flugzeugsektion komplementär ausgebildet ist;
- Positionieren (210) der ersten und der zweiten Flugzeugsektion zueinander in einer Zielposition;
- mechanisches Koppeln (212) der ersten und der zweiten Flugzeugsektion in der Zielposition;
- Verbinden (214) der Systeminfrastruktur der ersten und der zweiten Flugzeugsektion;
- bordinternes Prüfen (216) der Integrität des Flugzeugs; und
- Freigabe (218) des Flugbetriebs bei bestätigter Integrität.

14. Verfahren (200) nach Anspruch 13, wobei eine der beiden Flugzeugsektionen eine Wasserstofftankvorrichtung aufweist, und beide Flugzeugsektionen ein integres Flugzeug bilden; und
wobei vor dem Schritt des Bereitstellens bzw. Positionierens vorgesehen ist:
i) Entkoppeln (202) der Flugzeugsektion mit der Wasserstofftankvorrichtung von der Flugzeugsektion ohne Wasserstofftankvorrichtung; und Austauschen der Flugzeugsektion mit der Wasserstofftankvorrichtung durch eine Flugzeugsektion mit betankter Wasserstofftankvorrichtung; oder
ii) Betanken (204) der Wasserstofftankvorrichtung mit Abstand zu der anderen Flugzeugsektion.

## Claims

1. An aircraft section (10a, 10b) for an aircraft, the aircraft section comprising:
- at least one airframe part (12) from the group comprising wing and tail; and
- a first fuselage part (14);
wherein the at least one airframe part is mounted on the fuselage part;
wherein the first fuselage part has a first coupling point (16) designed for releasable connection to a second coupling point on a second fuselage part in order to form an integral fuselage of an aircraft when coupled;
wherein the first coupling point:
- provides a mechanical coupling (18) with a second coupling point;
- forms a system infrastructure interface (20); and
- provides a data transmission device (22) for an integrity check when the aircraft section is coupled to another aircraft section; and
wherein the first coupling point provides a positioning sensor system (24) for guided docking of the aircraft section with another aircraft section in a target position (25).
wherein the aircraft section further comprises a hydrogen tank device (50) with at least one tank unit (52) for storing hydrogen;
wherein the at least one tank unit forms a structurally integral unit with the first fuselage part; and
wherein hydrogen lines (54) are provided, which are designed to conduct hydrogen from the hydrogen tank device of the first aircraft section to consumers in the other aircraft section; wherein the hydrogen lines are formed at the first coupling point with a first line coupling for connection to a complementary second line coupling for reversible coupling with the other aircraft section.

2. Aircraft section according to claim 1, wherein the data transmission device (22) has transmitter and receiver units (22a, 22b) with which data (23) can be exchanged bidirectionally with a complementary second coupling point (26) of another aircraft section (28).

3. Aircraft section according to claim 1 or 2, wherein the positioning sensor system (24) is designed with sensors (30) and controls (32) that enable position detection, steering, and centering of the first aircraft section with another aircraft section relative to each other.

4. Aircraft section according to claim 1 or 2 or 3, wherein the data transmission device and the positioning sensor system use the same common data communication device (34).

5. Aircraft section according to one of the preceding claims, wherein the mechanical coupling (18) comprises at least three coupling units (36), each of which has:
i) a positioning pin (38) for mounting in a receptacle of a complementary coupling part; or
ii) a receptacle (40) for holding a positioning pin of a complementary coupling part;
wherein the positioning pin and the receptacle are configured to provide structural stability and centering of the mechanical coupling of the coupling parts.

6. Aircraft section according to any of the preceding claims, wherein the complementary coupling parts form a coupling unit; and wherein at least one of the coupling units has a self-locking bolt lock (42) which is designed to form a controllable lock for the coupling unit; and
wherein the bolt lock comprises a controller (44) that is in data exchange with the data transmission device.

7. Aircraft section according to one of the preceding claims, wherein the system infrastructure interface (20) comprises first supply line connection points (46) which are designed to be complementary to second supply line connection points (48) of the other aircraft section; and
wherein the supply line connection points are designed to be reversibly couplable at the coupling points.

8. Aircraft section according to one of claims 1-7, wherein the aircraft section is a tail section (56) and wherein the at least one airframe part comprises a tail unit comprising a vertical stabilizer and a horizontal stabilizer.

9. Aircraft section according to one of claims 1-7, wherein the aircraft section is a passenger section (58) and wherein the at least one airframe part comprises wings comprising engines.

10. An aircraft (60) comprising:
- a first aircraft section (62) according to one of the preceding claims; and
- a second aircraft section (64) comprising:
- at least one airframe part (12) from the group comprising wing and tail; and
- a first fuselage part (14);
wherein the at least one airframe part is mounted on the fuselage part;
wherein the first fuselage part has a first coupling point (16) designed for releasable connection to a second coupling point on a second fuselage part in order to form an integral fuselage of an aircraft when coupled;
wherein the first coupling point:
- provides a mechanical coupling (18) with a second coupling point;
- forms a system infrastructure interface (20); and
- provides a data transmission device (22) for an integrity check when the aircraft section is coupled to another aircraft section; and
wherein the first coupling point provides a positioning sensor system (24) for guided docking of the aircraft section with another aircraft section in a target position (25); and
wherein the second aircraft section is designed to be complementary to the first aircraft section and, when coupled to the first aircraft section, forms an integral aircraft (66).

11. Aircraft according to claim 10, wherein a plurality of first or second aircraft sections are provided; and
wherein the two aircraft sections are designed such that the first and/or second aircraft section is interchangeable with at least one other first and/or second aircraft section to form a structurally and functionally integral aircraft.

12. A hydrogen refueling system (69) for aircraft, comprising:
- an aircraft according to claim 10 or 11, wherein one of the two aircraft sections (62, 64) is formed with a hydrogen tank device;
- at least one transport system (70) for one of the two aircraft sections; and
- a hydrogen refueling station (72);
wherein the aircraft section with the hydrogen tank device can be decoupled from the other aircraft section and a spatial distance (74) between the two aircraft sections can be created using the transport system;
wherein the aircraft section with the hydrogen tank device can be refueled at a spatial distance; and
wherein the aircraft sections can subsequently be coupled to form a refueled integral aircraft.

13. A method (200) for providing an aircraft, the method comprising the steps of:
- providing (206) a first aircraft section according to one of claims 1-9;
- providing (208) a second aircraft section comprising:
- at least one airframe part (12) from the group comprising wing and tail; and
- a first fuselage part (14);
wherein the at least one airframe part is mounted on the fuselage part;
wherein the first fuselage part has a first coupling point (16) designed for releasable connection to a second coupling point on a second fuselage part in order to form an integral fuselage of an aircraft when coupled;
wherein the first coupling point:
- provides a mechanical coupling (18) with a second coupling point;
- forms a system infrastructure interface (20); and
- provides a data transmission device (22) for an integrity check when the aircraft section is coupled to another aircraft section; and
wherein the first coupling point provides a positioning sensor system (24) for guided docking of the aircraft section with another aircraft section in a target position (25); and
wherein the second aircraft section is designed to be complementary to the first aircraft section;
- positioning (210) the first and second aircraft sections relative to each other in a target position;
- mechanically coupling (212) the first and second aircraft sections in the target position;
- Connecting (214) the system infrastructure of the first and second aircraft sections;
- onboard testing (216) of the integrity of the aircraft; and
- Approval (218) of flight operations upon confirmation of integrity.

14. Method (200) according to claim 13, wherein one of the two aircraft sections has a hydrogen tank device, and both aircraft sections form an integral aircraft; and
wherein the step of positioning is preceded by:
i) decoupling (202) the aircraft section with the hydrogen tank device from the aircraft section without the hydrogen tank device; and replacing the aircraft section with the hydrogen tank device with an aircraft section with a refueled hydrogen tank device; or
ii) refueling (204) the hydrogen tank device at a distance from the other aircraft section.

## Revendications

1. Section d'avion (10a, 10b) pour un avion, la section d'avion comprenant:
- au moins une partie de cellule (12) choisie parmi le groupe comprenant la structure portante et l'empennage; et
- une première partie de fuselage (14);
dans laquelle la au moins une partie de cellule étant montée sur la partie de fuselage;
dans laquelle la première partie de fuselage comportant un premier point de couplage (16) conçu pour être connecté de manière amovible à un deuxième point de couplage sur une deuxième partie de fuselage afin de former, à l'état accouplé, une structure de fuselage intégrale d'un avion;
dans laquelle le premier point de couplage:
- un couplage mécanique (18) avec un deuxième point de couplage;
- forme une interface d'infrastructure système (20); et
- fournit un dispositif de transmission de données (22) pour un contrôle d'intégrité lorsque la section d'avion est couplée à une autre section d'avion; et
dans laquelle le premier point de couplage fournissant un système de capteurs de positionnement (24) pour un amarrage guidé de la section d'avion avec une autre section d'avion dans une position cible (25).
dans laquelle la section d'avion comprenant en outre un dispositif de réservoir d'hydrogène (50) avec au moins une unité de réservoir (52) pour stocker de l'hydrogène;
dans laquelle ladite au moins une unité de réservoir formant une unité structurellement intégrée avec la première partie de fuselage; et
dans laquelle des conduites d'hydrogène (54) étant prévues, qui sont conçues pour acheminer l'hydrogène du dispositif de réservoir d'hydrogène de la première section d'avion vers des consommateurs dans l'autre section d'avion; dans laquelle les conduites d'hydrogène étant conçues, pour un couplage réversible à l'autre section de l'avion, au niveau du premier point de couplage, avec un premier couplage de conduite destiné à être connecté à un deuxième couplage de conduite complémentaire.

2. Section d'avion selon la revendication 1, dans laquelle le dispositif de transmission de données (22) comprend des unités émettrices et réceptrices (22a, 22b) avec lesquelles des données (23) peuvent être échangées de manière bidirectionnelle avec un deuxième point de couplage complémentaire (26) d'une autre section d'avion (28).

3. Section d'avion selon la revendication 1 ou 2, dans laquelle le système de capteurs de positionnement (24) est conçu avec des capteurs (30) et des commandes (32) qui permettent de détecter la position, de diriger et de centrer la première section d'avion par rapport à une autre section d'avion.

4. Section d'avion selon la revendication 1 ou 2 ou 3, dans laquelle le dispositif de transmission de données et le système de capteurs de positionnement utilisent un même dispositif commun de communication de données (34).

5. Section d'avion selon l'une des revendications précédentes, dans laquelle le couplage mécanique (18) comprend au moins trois unités de couplage (36) qui présentent chacune:
i) un broche de positionnement (38) destiné à être maintenu dans un logement d'une pièce de couplage complémentaire; ou
ii) un logement (40) destiné à maintenir une broche de positionnement d'une pièce de couplage complémentaire;
dans laquelle la broche de positionnement et le logement étant conçus pour assurer la stabilité structurelle et le centrage de le couplage mécanique des pièces de couplage.

6. Section d'avion selon l'une des revendications précédentes, dans laquelle les pièces de couplage complémentaires forment une unité de couplage; et dans laquelle au moins l'une des unités de couplage comprend un verrou à boulon à fermeture automatique (42) conçu pour former une fermeture contrôlable de l'unité de couplage; et
dans laquelle le verrou à boulon à fermeture comportant une commande (44) qui est en communication de données avec le dispositif de transmission de données.

7. Section d'avion selon l'une des revendications précédentes, dans laquelle l'interface d'infrastructure système (20) comprend des premiers points de connexion des conduits d'alimentation (46) qui sont conçus de manière complémentaire à des seconds points de connexion des conduits d'alimentation (48) de l'autre section d'avion; et
dans laquelle les points de connexion des conduits d'alimentation étant conçus pour être couplés de manière réversible aux points de couplage.

8. Section d'avion selon l'une des revendications 1 à 7, dans laquelle la section d'avion est une section arrière (56) et dans laquelle la au moins une partie de cellule comprend un empennage arrière comprenant une dérive et un empennage horizontal.

9. Section d'avion selon l'une des revendications 1 à 7, dans laquelle la section d'avion est une section passagers (58) et dans laquelle la au moins une partie de cellule comprend des ailes comprenant des moteurs.

10. Avion (60) comprenant:
- une première section d'avion (62) selon l'une des revendications précédentes; et
- une deuxième section d'avion (64) comprenant:
- au moins une partie de cellule (12) choisie parmi le groupe comprenant la structure portante et l'empennage; et
- une première partie de fuselage (14);
dans laquelle la au moins une partie de cellule de vol étant montée sur la partie de fuselage;
dans laquelle la première partie de fuselage comportant un premier point de couplage (16) conçu pour être connecté de manière amovible à un deuxième point de couplage sur une deuxième partie de fuselage afin de former, à l'état couplé, une structure de fuselage intégrale d'un avion;
dans laquelle le premier point de couplage:
- un couplage mécanique (18) avec un deuxième point de couplage;
- forme une interface d'infrastructure système (20); et
- fournit un dispositif de transmission de données (22) pour un contrôle d'intégrité lorsque la section d'avion est couplée à une autre section d'avion; et
dans laquelle le premier point de couplage fournissant un système de capteurs de positionnement (24) pour un amarrage guidé de la section d'avion avec une autre section d'avion dans une position cible (25); et
dans laquelle la deuxième section d'avion étant conçue de manière complémentaire à la première section d'avion et formant, à l'état couplé avec la première section d'avion, un avion intégré (66).

11. Avion selon la revendication 10, dans laquelle une pluralité de premières ou deuxièmes sections d'avion sont prévues; et
dans laquelle les deux sections d'avion étant conçues de telle sorte que la première et/ou la deuxième section d'avion puissent être remplacées par au moins une autre première et/ou deuxième section d'avion afin de former un avion structurellement et fonctionnellement intégré.

12. Système de ravitaillement en hydrogène (69) pour avions, comprenant:
- un avion selon la revendication 10 ou 11, dans laquelle l'une des deux sections d'avion (62, 64) est conçue avec un dispositif de réservoir d'hydrogène;
- au moins un système de transport (70) pour l'une des deux sections d'avion; et
- une station de ravitaillement en hydrogène (72);
dans laquelle la section d'avion équipée du dispositif de réservoir d'hydrogène pouvant être découplée de l'autre section d'avion et une distance spatiale (74) pouvant être créée entre les deux sections d'avion à l'aide du système de transport;
dans laquelle la section d'avion équipée du dispositif de réservoir d'hydrogène pouvant être ravitaillée à distance; et
dans laquelle les sections d'avion pouvant ensuite être couplées pour former un avion intégré ravitaillé.

13. Procédé (200) pour fournir un avion, le procédé comprenant les étapes suivantes:
- fournir (206) une première section d'avion selon l'une des revendications 1 à 9;
- fournir (208) une deuxième section d'avion comprenant:
- au moins une partie de cellule (12) choisie parmi le groupe comprenant la structure portante et l'empennage; et
- une première partie de fuselage (14);
dans laquelle la au moins une partie de cellule de vol étant montée sur la partie de fuselage;
dans laquelle la première partie de fuselage comportant un premier point de couplage (16) conçu pour être connecté de manière amovible à un deuxième point de couplage sur une deuxième partie de fuselage afin de former, à l'état couplé, une structure de fuselage intégrale d'un avion;
dans laquelle le premier point de couplage:
- un couplage mécanique (18) avec un deuxième point de couplage;
- forme une interface d'infrastructure système (20); et
- fournit un dispositif de transmission de données (22) pour un contrôle d'intégrité lorsque la section d'avion est couplée à une autre section d'avion; et
dans laquelle le premier point de couplage fournissant un système de capteurs de positionnement (24) pour un amarrage guidé de la section d'avion avec une autre section d'avion dans une position cible (25); et
dans laquelle la deuxième section d'avion étant conçue de manière complémentaire à la première section d'avion;
- positionnement (210) des première et deuxième sections d'avion l'une par rapport à l'autre dans une position cible;
- coupler mécaniquement (212) les première et deuxième sections d'avion dans la position cible;
- connexion (214) de l'infrastructure du système de la première et de la deuxième section de l'avion;
- vérification embarquée (216) de l'intégrité de l'avion; et
- autorisation (218) du vol une fois l'intégrité confirmée.

14. Procédé (200) selon la revendication 13, dans laquelle l'une des deux sections de l'avion comprend un dispositif de réservoir d'hydrogène, et les deux sections de l'avion forment un avion intègre; et
dans laquelle, avant l'étape de mise à disposition ou de positionnement, il est prévu:
i) le découplage (202) de la section d'avion avec le dispositif de réservoir d'hydrogène de la section d'avion sans dispositif de réservoir d'hydrogène; et le remplacement de la section d'avion avec le dispositif de réservoir d'hydrogène par une section d'avion avec un dispositif de réservoir d'hydrogène ravitaillé; ou
ii) ravitaillement (204) du dispositif de réservoir d'hydrogène à distance de l'autre section d'avion.
